# EUROPEAN PATENT SPECIFICATION

(11) **EP 1 643 711 B1**
(45) Date of publication and mention of the grant of the patent: **12.12.2007**
(21) Application number: 04292339.1
(22) Date of filing: 30.09.2004
(51) Int. Cl.: H04L 29/06, H04Q 7/22

(54) **Transmission of multimedia messages to a TV screen**
Multimedianachrichtenübertragung zu einem Fernsehgerät
Transmission de messagerie multimedia à un appareil de télévision

(43) Date of publication of application: 05.04.2006
(73) Proprietor: Alcatel Lucent, 75008 Paris (FR)
(72) Inventor: Wahl, Stefan, Dipl.-Ing., 70701 Schwieberdingen (DE); Laible, Volker, Dipl.-Ing., 70469 Stuttgart (DE); Satzke, Klaus, Dr., 71732 Tamm (DE)
(74) Representative: Schmidt, Werner Karl

(56) References cited:
- WO-A-01/01684
- DE-A1- 10 139 331
- SIKORA T ET AL: "MPEG-4 video and its potential for future multimedia services" CIRCUITS AND SYSTEMS, 1997. ISCAS '97., PROCEEDINGS OF 1997 IEEE INTERNATIONAL SYMPOSIUM ON HONG KONG 9-12 JUNE 1997, NEW YORK, NY, USA,IEEE, US, vol. 2, 9 June 1997 (1997-06-09), pages 1468-1471, XP010236363 ISBN: 0-7803-3583-X

## Description

The present invention relates to a method and a server for transferring a message originating in a telecommunication network to an addressed subscriber.

Nowadays, in mobile telecommunication networks such as GSM network (GSM = Global System for Mobile Communications) the exchange of short messages between mobile terminals by means of the Short Message Service (= SMS) has grown considerably. As intentionally developed, short messages include only text, without any multi-media data such as pictures or video.

Several technologies are developed to extend the Short Message Service to multi-media data to enable the exchange of multi-media information between mobile terminals.

Due to the development of Enhanced Message Service (EMS) Short Message Service has recently expanded and has lead to the issuance of the recommendation on the subject in the form of the SMS standard 3GPP TS 23.040. An enhanced message can contain information elements containing multi-media data to be associated with the EMS message.

Further, a new type of messages has recently been developed, known as Multi-Media Messaging Service (MMS) messages. These messages have a transmission protocol and a structure completely different from those of SMS and EMS messages and are standardised in 3GPP recommendation TS 23.140. MMS messages have a structure defined by IETF (in RF C2045) consisting in multi-purpose Internet Mail Extensions (IME) file format, who has a header and a message body that can contain text, still image, audio or video.

For example, US 2004/0147284 A1 describes the exchange of MMS messages between mobile terminals connected via a mobile telecommunication network.

The Multi-Media Messaging Service is a service with which messages with multi-media elements of different types (e.g. still image, audio, video) and different formats (with respect to still image: e.g. JPEG or GIF) can be exchanged between mobile terminals via network components or directly with each other. MMS is a peer-to-peer messaging service between two MMS user agents or between a MMS user agent and a third party Value-Added Service Provider (= VASP), which are both connected to a MMS relay / server. The MMS user agent resides either on a mobile phone, on an external device, e.g. a note-book / laptop, covered or connected to a mobile phone or even on another telecommunication terminal. It is an applicational function on the respective telecommunication equipment that provides the user operability to view, compose and handle the multi-media messages.

The use of MMS messages is therefore restricted to terminals which are capable of supporting this kind of application and works only between dedicated end-devices, as for example MMS capable mobile phones. This excludes all users which do not use the newest end-devices, which significantly reduces the interest in exchanging such messages and retarding the choice of this communication services. Furthermore, different versions of EMS messages have already been developed and some terminals interpret the MMS application but reject the EMS application, which further limits the possibility to exchange multi-media messages between subscribers of a telecommunication network.

An object of the present invention is therefore to improve the transfer of messages originating in a telecommunication network to the addressed subscribers.

The object of the present invention is achieved by a method of transferring a message originating in a telecommunication network to an addressed subscriber: as defined by Claim 1. The object of the present invention is further achieved by a server for controlling the transfer of messages originating in a telecommunication network to addressed subscribers as defined by Claim 9.

Documents DE-A-101 39 331 and WO-A-01 01684 disclose the transfer of a message originating in a telecommunication network (eg. an SMS message) to an addressed subscriber by inserting the message into a TV signal which is broadcast and output on the TV set of the addressed subscriber.

According to the invention the server first decides whether a message should be transferred to the addressed subscriber via a telecommunication terminal or via a TV set assigned to the addressed subscriber. The server determines the message type of the received message and compares the message type of the received message with subscriber profile data of the addressed subscriber. It checks whether a telecommunication terminal capable to receive messages of the determined type is assigned to the addressed subscriber. For example, it identifies whether a received short message is of the EMS message type or MMS message type. It looks up in the user profile of the addressed subscriber to identify whether it registers a telecommunication terminal for the respective subscriber capable to receive EMS or MMS messages, respectively. If it detects such kind of terminal assigned to the subscriber, it forwards the received message to the detected multi-media terminal. If it founds that the addressed subscriber has a simple mobile telephone which is not capable to receive and process such kind of multi-media messages, it executes the aforementioned steps and initiates the outputting of the message on the TV set of the addressed subscriber.

The invention allows to push multi-media messages, e.g. including video clips, from any transmitting device or application of the telecommunication network to those user that do not possess enhanced telecommunication equipment. It is sufficient that the addressed user has access to a TV set which is used to communicate with his users in a uni-directional manner. The invention makes it possible to introduce new communication relations between users having the attitude of first movers and users that habit as technology laggards. Often, there exists a multi-media communication intention between those users but fails due to the missing devices or knowledge of the second group of users. Further, the user-interface for receiving and playing such messages is simplified for the second group of users. The invention allows users which only know the remote control of the TV set to receive complex multi-media messages which otherwise have to be handled via complex, specific interfaces. The users may control the receipt and play of complete multimedia messages by means of a control interface based on known "look and feel". For example, the arrival of a new multi-media message is indicated by a LED on an extra device (X-box, set-top box) or SAT receiver, VCR, DVR or by any additional icon on the TV screen. Pushing one button (for example channel selection) on a remote control starts playing the video clip on the screen.

Thereby, the invention enlarges the number of potential recipients which could be addressed with the multi-media messages and thereby attracts first movers to use such multi-media message services and invest in enhanced telecommunication terminals capable to send and receive such kind of messages.

Further advantages are achieved by the embodiments of the invention indicated by the dependent claims.

According to a preferred embodiment of the invention, the telecommunication terminal is a mobile phone and the messages received by the server are multi-media messages containing video content, e.g. a video clip. For example, these messages are MMS messages or EMS messages as, e.g., specified in 3GPP recommendation TS 23.040 or TS 23.140. In addition to video content, such messages can contain pictures, music, text or presentations of graphical elements on the screen.

Preferably, the telecommunication terminal addresses the recipient of the message by means of a telephone number assigned to the addressed subscriber. For example, it uses the telephone number of a PSTN or ISDN telephone set of the recipient for such purpose.

Preferably, the sever looks up in a data base to identify a headend node of a TV broadcasting network that is capable to broadcast a TV signal to the TV set of the addressed subscriber. Then, it transmits the message to the identified headend node for inserting the message in the TV broadcast channel. Different kinds of TV broadcast channels could be used to transport the TV signal to the TV set of the addressed subscriber. For example, the TV broadcast channels are established on satellite, cable TV or terrestrial technologies. In the coming year the TV broadcast will convert to digital transmission, which allows to send video streams to dedicated digital receivers (DVB-S, DVB-C, DVB-T). The date base contains information about the TV technology as well as of a dedicated headend node of the respective TV broadcasting network that shall be used to transmit the TV signal to the TV set of the addressed subscriber.

According to a preferred embodiment of the invention, the server performs a media conversion of the message to a format applicable in a TV broadcasting network. Preferably, it looks-up in a data base to identify the type of TV broadcasting network that has to be used to broadcast the video signal to the TV set of the addressed subscriber. For example, it identifies whether the video signal has to be sent via an analogue or digital TV broadcasting network, via satellite, cable TV or terrestrial technologies. According to the identified type of TV broadcasting network, the sever applies a media conversion that is adapted to the information format and needs of the identified type of TV broadcasting network. For example, the server converts video data transported within the message to a MPEG format and transmits the MPEG stream to a satellite, cable or terrestrial headend. The headend multiplexes the packets of the MPEG transport stream in the downlink stream. The multiplexing of the MPEG transport stream packets do not request any realtime requirements. The receiver unit, e.g. a digital broadcast receiver or DVR, extracts the MPEG transport stream packets out of the downstream by means of the address key or encryption key used for the MPEG transport stream.

According to a further embodiment of the invention, the server looks up in a data base to identify the address assigned to the TV set of the addressed subscriber and transmits the message together with the address to the identified headend node for inserting it in the TV broadcast channel. This address is later on used by the receiver unit to extract the TV signal out of the downlink channel. A plurality of subscribers shares a common broadcast channel and each of these TV sets is identified by a unique specific address assigned to the respective TV set. If a receiver detects an address assigned to the assigned TV set, it extracts the corresponding data out of the broadcast channel.

In case the TV set assigned to the addressed subscriber is connected via an analogue TV broadcast network the headend node inserts message in the blinking intervals of the TV signal. Encryption/decryption techniques are used to extract the message at the dedicated receiver unit. For example, a dedicated set-top box or smart card holds an subscriber specific decryption key corresponding with the encryption key of the subscriber that is held in the data base of the server.

Preferably, the server looks up in a data base to identify an encryption key assigned to the TV set of the addressed subscriber. Then, the video stream or the data encoded within the video stream are encrypted by means of the determined encryption key. This approach ensures privacy and confidentiality of the data transported via a broadcast medium to the addressed subscriber. Further, it is possible that the server transfers address information and an encryption key to the identified headend node and the headend node executes the encryption and addressing of the information transported within the TV signal.

Preferably, the receiver unit stores the extracted message and indicates the receipt of the message to the addressed subscriber. For example, a digital broadcast receiver or DVR extracts the transport stream packets out of the downstream, decrypts the packets, stores them on a local memory and indicates the complete receipt of the multi-media message (video clip, audio stream, text) with a LED or icon on the TV screen. In the following, subscriber can view this pushed multi-media message, for example by simply selecting a dedicated channel number. Those enhancements may allow to organise, delete, review or store multi-media messages at the TV set.

These as well as other features and advantages of the invention may be better appreciated by reading the following detailed description of presently preferred exemplary embodiments taken in conjunction with accompanying drawings, of which:
- Fig. 1: is a block diagram of a communication system with a server according to the invention.
- Fig. 2: Is a functional view showing components of the communication system of Fig. 1.

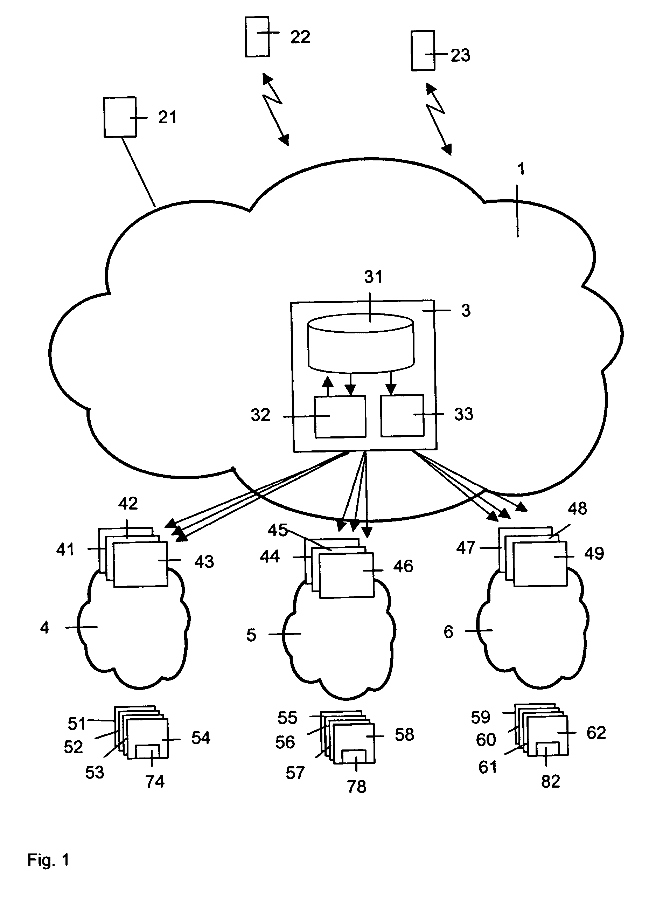

Fig. 1 shows a telecommunication network 1, a plurality of TV broadcast networks 4, 5 and 6, a plurality of telecommunication terminals 21, 22 and 23 and a plurality of TV sets 51 to 62.

The telecommunication terminals 21 to 23 are terminals capable to exchange messages via the telecommunication network 1. The terminals 22 and 23 are cellular phones according to the GSM or UMTS standard (GSM = Global System für Mobile Communications; UMTS = Universal Telecommunication System) that are capable to exchange MMS messages via a MMS service provided by the telecommunication network 1 (MMS = Multi-Media Messaging Service). A MMS user agent resides on the terminals 22 and 23, for example a UMTS-UE (UE = User Equipment) or a GSM-MS (MS = Mobile Station). This applicational function provides the users of the terminals 22 and 23 with the ability to view, compose, handle, submit and receive MMS messages.

The terminal 21 is a computer which is connected via a wired connection or via a wireless connection with the telecommunication network 1. As the terminals 22 and 23, a MMS user agent resides on the terminal 21 that enables the user of the computer to view, compose and submit and receive MMS messages and exchange such messages via the MMS services provided by the telecommunication network 1.

But, it is also possible that the telecommunication terminals 21 to 23 are any kind of terminal capable to exchange messages by means of any kind of message service provided by the telecommunication network 1. Preferably, these messages are video messages containing video or freezed picture content, for example encoded in JPEG or GIF format.

According to a further embodiment, the messages exchanged between the terminals 21 to 23 are push-to-video like messages wherein a video message is send via a uni-directional connection to a recipient or group of recipients as soon as the subscriber activates a push-button.

Preferably, the terminals 21 to 23 exchange multi-media messages containing multi-media data, for example via an EMS application.

The telecommunication network 1 is a network that is capable to exchange messages between telecommunication terminals in a bi-directional way. Preferably, the telecommunication network 1 is composed of various cellular radio networks and data networks, e.g. composed of one or several radio networks according to the GSM and/or UMTS standard and one or more IP networks. IP networks are communication networks using a common level 3 IP protocol (IP = Internet Protocol) as level 3 communication protocol. For example, such IP network connects the telecommunication terminal 21 with the telecommunication network 1. From physical point of view, there exist various possibilities to connect the telecommunication terminal 21 with the telecommunication network 1. For example, the telecommunication network 1 is connected via a LAN, a wireless LAN, a digital subscriber line or via a PSTN or ISDN connection (PSTN = Public Switch Telecommunication Network, ISDN = Integrated Service Digital Network; LAN = Local Area Network) with the telecommunication network 1.

Further, the telecommunication network 1 connects the telecommunication terminals 21 to 23 with the server 3. The sever 3 is composed of one or several interlinked computers, a software platform and various application programs. The functionalities of the server 3 are provided by the execution of the software components by the hardware platform of the server 3. From functional point of view, the server 3 comprises several control units 32 and 33 and a data base 31.

The data base 31 contains a plurality of subscriber profile data sets of subscribers of the service provided by the sever 3. Each of the subscriber profile data sets contains information used in the telecommunication network 1 to address the respective subscriber, as well as information used to route the message to one of the TV sets 51 to 62.

For example, telephone numbers are used within the telecommunication network 1 to address. Alternatively, the name of the subscriber or any other kind of unique information, e.g. the email address of the respective subscriber, can be used to address the subscribers. Route information contains information about the TV broadcasting network and an headend node of this TV broadcasting network which is capable to broadcast a TV signal to a TV set of the respective subscriber.

In addition, the subscriber profile date contains address information and/or an encryption key assigned to the respective subscriber.

Optionally, the profile data set contains information about the TV broadcasting network type (satellite, terrestrial, cable, analogue, digital, used protocols and formats) of the TV broadcast network the TV set of the respective subscriber is connected to.

The control unit 32 receives messages from telecommunication terminals 21 to 23 that should be forwarded by means of the messaging service provided by the server 3. If it receives such message, e.g. a MMS message, it first determines the recipient of the message by means of the accompanying address or signal information. For example, the recipient of the message is addressed by means of a telephone number assigned to the addressed subscriber. The control unit 32 looks up in the data base 31, fetches the subscriber profile data set allocated to the telephone number and selects by means of this information a headend node of a TV broadcast network that has to be used to broadcast the content of the received message to a TV set of the addressed subscriber. Further, it determines by means of this data base access an address allocated to this TV set and/or an encryption key allocated to this TV set of the addressed subscriber.

In parallel, the control unit 33 applies a media conversion on the received message to convert the message to a format applicable in the TV broadcast network.

In the following, the control unit 32 transfer the message (in converted form) to the selected headend node of the TV broadcasting network. For example, it establishes an TCP/IP-based communication connection with the selected headend node and transfers the message (in converted form) together with the address information and/or the encryption key via this communication connection to the selected headend node. Further, it causes the headend node to insert the message together with the address and/or to insert the message encrypted by means of the encryption key into a TV signal and broadcast the TV signal via a TV broadcast channel to the TV set of the addressed subscriber.

The TV broadcasting network 4 is a satellite based TV broadcasting network, the TV broadcasting network 5 is a TV cable network and the TV broadcasting network 6 is a TV broadcasting network based on terrestrial technology. Each of these TV broadcasting networks has a plurality of headend nodes capable to receive information from the server 3. For example, Fig. 1 shows three headend nodes 41 to 43 of the TV broadcasting network 4, three headend nodes 44 to 46 of the TV broadcasting network 5 and three headend nodes 47 to 49 of the TV broadcasting network 6. Each of the headend nodes 41 to 49 represents an access node capable to insert a TV signal in a broadcast channel broadcast in the whole or in a selected area of the respective TV broadcasting network.

The TV sets 51 to 54 are connected with the satellite receiver to receive TV signals broadcast within the TV broadcast network 4, the TV sets 55 to 58 are connected with a cable network to receive TV signals broadcast within the TV broadcast net 5 and the TV sets 59 to 62 are connected with antennas to receive TV signals broadcast via the TV broadcast network 6. Each of the TV sets 51 to 62 has an external or internal receiver unit, e.g. receiver units 74, 78 and 82 shown in Fig. 1, that are equipped with additional functionalities to filter out, store and display messages originating in the telecommunication network 1. For example, the receiver unit 74 is a digital DVB-S receiver, the receiver unit 78 is a digital DVB-C receiver and the receiver unit 82 is a digital DVB-T receiver. Each of these receiver units owns a unique address key and/or decryption key to extract messages out of the data stream that are directed to its associated TV set. As soon as a receiver unit has extracted a message out of the downstream, it stores the message in a local memory and indicates the receipt of the message to the addressed subscriber. For example, an LED or any specific icon is displayed on the display unit of the receiver unit. Further, it can display a specific icon on the TV screen of the associated TV set. If the user selects a dedicated channel number at the TV set, he has the possibility to organise, delete and display messages stored on the local memory. Further, the receiver unit could have the option to store messages on a CD or DVD. Preferably, the application is controlled via a graphical user interface displayed on the TV screen of the TV set.

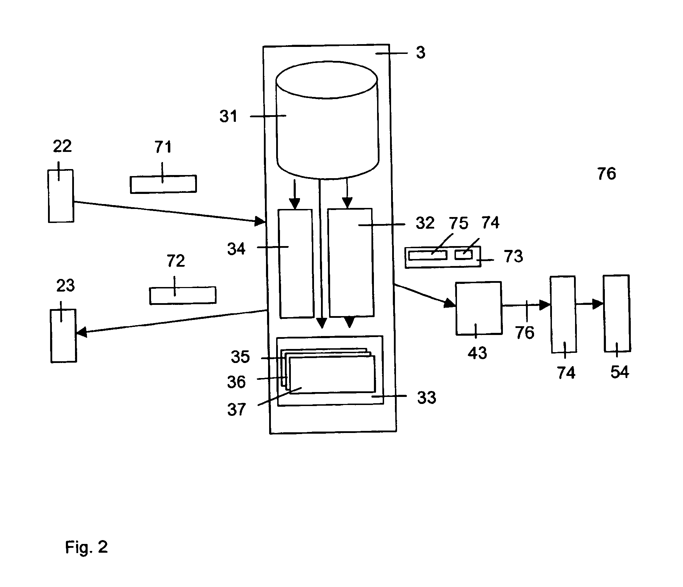

Fig. 2 exemplifies a further embodiment of the invention. Fig. 2 shows the server 3, the telecommunication terminals 22 and 23, the headend node 43, the receiver unit 74, the TV set 54 and the messages 71 to 73.

The server 3 represents a server of the telecommunication network 1 that provides a messaging service for two or more terminals of the telecommunication network 1. For example, the server 3 is a MMS relay/server or is a network entity responsible for the storage and handling of incoming and outcoming MMS messages and for the transfer of MMS messages between different terminals of the telecommunication network 1.

From functional point of view, the server 3 comprises the data base 31, the control units 32 and 33 and a control unit 34.

The control unit 34 controls the transfer of incoming messages between telecommunication terminals of the telecommunication network 1. Further it checks whether a recipient of an incoming message is in a position to receive the message via a telecommunication terminal of the telecommunication network 1 or whether this recipient has to receive the message via a TV set.

For example, the terminal 22 sends a multi-media message 71 to the server 3. The multi-media message 71 is directed to two or more subscribers of the messaging service provided by the server 3. For example, the multi-media message 71 contains and address field specifying two or more destination addresses or specifies a user group which has to receive the multi-media message.

When receiving the message 71, the control unit 34 determines the message type of the multi-media message 71. Then, it accesses the data base 31 and selects the subscriber data sets of the subscriber specified as recipient of the multi-media message by means of the address information. Each of the subscriber data sets of recipients contains information specifying the types of multi-media message the subscriber is capable to receive via a terminal of the telecommunication network 1. For example, a first subscriber is equipped with a simple mobile telephone set and is only capable to receive SMS messages (SMS = Short Message Service). Another subscriber is equipped with an enhanced PDA which is capable to receive various types of MMS or EMS messages.

If the control unit 34 identifies that an recipient is capable to receive the message 71 via a telecommunication terminal, the control unit 34 forwards this message to this terminal of the telecommunication network 1. For example, the control unit 34 forwards a multi-media message 71 to the terminal 23 which is capable to receive multi-media messages.

If the control unit 34 does not find a telecommunication terminal assigned to the respective recipient and capable to receive messages according to the message type of the message 71, it checks whether a conversion of the message type to an appropriate message type is possible and whether the recipient can alternatively be reached via an associated TV set. If the message conversion is not possible (e.g. in case of a multi-media message which cannot be converted to a SMS message), the control unit 34 contacts the control unit 32 for transmitting the multi-media message to the dedicated TV set of the recipient.

For example, the control unit 34 contacts the control unit 32 if it receives a message directed to a PSTN or ISDN telephone set.

The control unit 32 accesses the data base 31 and looks for the headend node, address information and encryption key assigned to the recipient. Further, it triggers the control unit 33 to apply an appropriate media conversion on the multi-media message 71.

The control unit 33 contains several conversion units 35 to 37, each adapted to a specific type of TV broadcast network, e.g. analogue/digital network, terrestrial, cable or satellite technology.

The control unit 33 receives information about the type of broadcast network that has to be used to transfer the message to the dedicated TV set. Further, the control unit 33 receives user preferenced data of the recipient which influences the media conversion, e.g. the user specific style to perform a media conversion, e.g. of a text-message to a video content, and the style of notifying the originator of the message.

Preferably, the control unit 33 converts the whole content of a multi-media message 71 to a MPEG data stream 75 (MPEG = Moving Picture Expert Group) which is transported together with the address information within the message 73 to the one or more headend nodes allocated by the control unit 32.

Further, it is possible that the control unit 33 additionally receives information about the originator of the message, if available. The multimedia environment allows also to provide multimedia information about the originator (picture,...) which are included in the MPEG data stream 75 to notify the originator of the message to the receiver ― similar to CLIP (= Calling Line Identification Presentation).

For example, the message 43 is directed to the headend node 43 of the TV broadcast network 4. Preferably, the server 3 transfers the message 43 via a secure connection to the headend node 43 and contains in addition to the address information 74 the encryption key allocated by the control unit 32.

But, it is also possible that the control unit 32 submits an encryption key to the control unit 33, the control unit 33 encrypts the MPEG data stream and the server 3 transfers the stream in encrypted form to the headend node 43.

The headend node 43 includes the MPEG transport stream 75 together with the address information 74 in a TV broadcast channel and thereby broadcasts the information 71 within an TV signal to the TV sets linked to the TV broadcasting network 4.

The receiver unit 74 extracts encrypted MPEG stream packets out of the downstream, decrypts the packets by means of its decryption key and stores the message in a local memory.

Instead of storing the message in a local memory, the availability of a new message is only indicated by LED or other means, but the message itself is stored in a network device. The message will be broadcast on the TV broadcast network, as soon as the user provides a trigger. The user can trigger the provision of a new message by calling a dedicated number with the POTS phone, or sending a SMS to a dedicated service number. As soon as the user has provided this trigger (called the service number) the server 3 provides the MPEG streams to the headend for distribution.

## Claims

1. A method of transferring a message (71) originating in a telecommunication network (1) to an addressed subscriber, the method comprising the steps of:
transmitting the message (71) from a telecommunication terminal (22) of the telecommunication network (1) to a server (3);
determining, by the server (3), the message type of the received message (71), comparing the message type of the received message (71) with subscriber profile data of the addressed subscriber, and
checking whether a telecommunication terminal (21 to 23) capable to receive messages of this type is assigned to the addressed subscriber; if detecting such kind of telecommunication terminal (21 to 23) assigned to the subscriber, forwarding the received message (71) to the detected terminal (21 to 23);
if detecting no such kind of telecommunication terminal (21 to 23) assigned to the subscriber, executing the following steps:
adding an address allocated to a TV set (51 to 62) of the addressed subscriber or encrypting the message by means of an encryption key allocated to a TV set (51 to 62) of the addressed subscriber and inserting the message into a TV signal (76);
broadcasting the TV signal (76) via a TV broadcast channel;
filtering out the message at a receiver unit (74) assigned to the TV set (54) of the addressed subscriber; and
outputting the message on the TV set (54).

2. The method of claim 1,
**characterised in**
**that** the method comprises the further steps of: looking up in the data base (31) to identify a headend node (41 to 49) of a TV broadcasting network; and transmitting the message to the identified headend node for inserting the message in the TV broadcast channel.

3. The method of claim 2,
**characterised in**
**that** the method comprises the further steps of: looking up in the data base (31) to identify the address assigned to the TV set (54) of the addressed subscriber; and transmitting the message together with the address (74) to the identified headend node (43) for inserting it in the TV broadcast channel.

4. The method of claim 2 or claim 3,
**characterised in**
**that** the method comprises the further steps of: looking up in the data base (31) to identify an encryption key assigned to the TV set (54) of the addressed subscriber and encrypting the video stream (76) by means of the encryption key.

5. The method of claim 1,
**characterised in**
**that** the method comprises the further step of performing a media conversion of the message to a format applicable in a TV broadcasting network (4, 5, 6).

6. The method of claim 5,
**characterised in**
**that** the method comprises the further steps of: looking up in the data base (31) to identify the type of TV broadcasting network (4, 5, 6) used to broadcast the video signal (76); and apply a media conversion adapted to the identified type of TV broadcasting network.

7. The method of claim 1,
**characterised in**
**that** the method comprises the further steps of: storing the extracted message at the receiver unit (74); and indicating the receipt of the message to the addressed subscriber.

8. The method of claim 1,
**characterised in**
**that** the message (71) is a multi-media message containing video content and the telecommunication terminal (22 to 23) uses a telephone number of a PSTN or ISDN telephone set for addressing the recipient of the message towards the server (3).

9. Server (3) for controlling the transfer of messages (71) originating in a telecommunication network (1) to addressed subscribers, the server (3) comprising a control unit adapted to receive a message from a telecommunication terminal (22) of the telecommunication network (1), to determine the message type of the received message (71), compare the message type of the received message (71) with subscriber profile data of the addressed subscriber, and check whether a telecommunication terminal (21 to 23) capable to receive messages of this type is assigned to the addressed subscriber, the control unit being further adapted to forward, if detecting such kind of telecommunication terminal (21 to 23) assigned to the subscriber, the received message (71) to the detected terminal (21 to 23), and if detecting no such kind of telecommunication terminal (21 to 23) assigned to the subscriber, the control unit being further adapted to determine an address allocated to an TV set (54) of the addressed subscriber or an encryption key allocated to the TV set (54) of the addressed subscriber, to transfer the message to an headend node (41 to 49) of a TV broadcasting network (4, 5, 6) and to cause the headend node (41 to 49) to insert the message together with the address or insert the message encrypted by means of the encryption key into a TV signal and to broadcast the TV signal via a TV broadcast channel.

## Patentansprüche

1. Verfahren zur Übertragung einer Nachricht (71), die in einem Telekommunikationsnetzwerk (1) entsteht, an einen adressierten Teilnehmer, wobei das Verfahren folgende Schritte umfasst:
Senden der Nachricht (71) von einem Telekommunikations-Endgerät (22) des Telekommunikationsnetzwerks (1) an einen Server (3);
Durch den Server (3) Bestimmung des Nachrichtentyps der empfangenen Nachricht (71), Vergleich des Nachrichtentyps der empfangenen Nachricht (71) mit den Daten des Teilnehmerprofils des adressierten Teilnehmers und
Überprüfung, ob ein Telekommunikations-Endgerät (21 bis 23), das in der Lage ist, Nachrichten dieses Typs zu empfangen, dem adressierten Teilnehmer zugeordnet ist; Falls eine solche Art von Telekommunikations-Endgerät (21 bis 23), das dem Teilnehmer zugeordnet ist, erkannt wird, Weiterleiten der empfangenen Nachricht (71) an das erkannte Endgerät (21 bis 23);
Falls eine solche Art von Telekommunikations-Endgerät (21 bis 23), das dem adressierten Teilnehmer zugeordnet ist, nicht erkannt wird, Ausführen der folgenden Schritte:
Hinzufügen einer einem Fernsehgerät (51 bis 62) des adressierten Teilnehmers zugeordneten Adresse oder Verschlüsseln der Nachricht mittels eines
Verschlüsselungs-Schlüssels, der einem Fernsehgerät (51 bis 62) des adressierten Teilnehmers zugeordnet ist, und Einfügen der Nachricht in ein Fernsehsignal (76);
Senden des Fernsehsignals (76) über einen Fernsehkanal; An einer Empfängereinheit (74), die dem Fernsehgerät (54) des adressierten Teilnehmers zugeordnet ist, Herausfiltern der Nachricht; und
Ausgabe der Nachricht auf dem Fernsehgerät (54).

2. Verfahren aus Anspruch 1,
**dadurch gekennzeichnet, dass**
das Verfahren folgende weitere Schritte umfasst: Suchen in der Datenbank (31), um einen Kopfstations-Knoten (41 bis 49) eines Fernsehübertragungsnetzes zu erkennen; und Senden der Nachricht an den erkannten Kopfstations-Knoten, um die Nachricht in den Fernsehkanal einzufügen.

3. Verfahren aus Anspruch 2,
**dadurch gekennzeichnet, dass**
das Verfahren folgende weitere Schritte umfasst: Suchen in der Datenbank (31), um die dem Fernsehgerät (54) des adressierten Teilnehmers zugeordnete Adresse zu erkennen; und Senden der Nachricht zusammen mit der Adresse (74) an den erkannten Kopfstations-Knoten (43), um sie in den Fernsehkanal einzufügen.

4. Verfahren aus Anspruch 2 oder Anspruch 3,
**dadurch gekennzeichnet, dass**
das Verfahren folgende weitere Schritte umfasst: Suchen in der Datenbank (31), um einen dem Fernsehgerät (54) des adressierten Teilnehmers zugeordneten Verschlüsselungs-Schlüssel zu erkennen, und Verschlüsseln des Video-Datenstroms (76) mittels des Verschlüsselungs-Schlüssels.

5. Verfahren aus Anspruch 1,
**dadurch gekennzeichnet, dass**
das Verfahren den weiteren Schritt der Durchführung einer Medien-Umwandlung der Nachricht in ein Format umfasst, das in einem Fernsehübertragungsnetz (4, 5, 6) anwendbar ist.

6. Verfahren aus Anspruch 5,
**dadurch gekennzeichnet, dass**
das Verfahren folgende weitere Schritte umfasst: Suchen in der Datenbank (31), um den Typ des zur Übertragung des Videosignals (76) verwendeten Fernsehübertragungsnetzes (4, 5, 6) zu erkennen; und Anwenden einer Medien-Umwandlung, die an den erkannten Typ des Fernsehübertragungsnetzes angepasst ist.

7. Verfahren aus Anspruch 1,
**dadurch gekennzeichnet, dass**
das Verfahren folgende weitere Schritte umfasst:
Speichern der entnommenen Nachricht in der Empfängereinheit (74); und Anzeige des Empfangs der Nachricht an den adressierten Teilnehmer.

8. Verfahren aus Anspruch 1,
**dadurch gekennzeichnet, dass**
die Nachricht (71) eine Multimedia-Nachricht ist, die einen Video-Inhalt hat, und das Telekommunikations-Endgerät (22 bis 23) eine Telefonnummer eines PSTN- oder ISDN-Telefons benutzt, um dem Server (3) den Empfänger der Nachricht anzuzeigen.

9. Server (3) zur Steuerung der Übertragung von in einem Telekommunikationsnetzwerk (1) entstehenden Nachrichten (71) an adressierte Teilnehmer, wobei der Server (3) eine Steuerungseinheit enthält, die angepasst ist, eine Nachricht von einem Telekommunikations-Endgerät (22) des Telekommunikationsnetzwerks (1) zu empfangen, den Nachrichtentyp der empfangenen Nachricht (71) zu bestimmen, den Nachrichtentyp der empfangenen Nachricht (71) mit Teilnehmerprofil-Daten des adressierten Teilnehmers zu vergleichen und zu überprüfen, ob ein Telekommunikations-Endgerät (21 bis 23), das in der Lage ist, Nachrichten dieses Typs zu empfangen, dem adressierten Teilnehmer zugeordnet ist, wobei die Steuerungseinheit ferner angepasst ist, falls eine solche Art von Telekommunikations-Endgerät (21 bis 23), das dem Teilnehmer zugeordnet ist, erkannt wird, die empfangene Nachricht (71) an das erkannte Endgerät (21 bis 23) weiterzuleiten, und falls eine solche Art von Telekommunikations-Endgerät (21 bis 23), das dem Teilnehmer zugeordnet ist, nicht erkannt wird, die Steuerungseinheit weiterhin angepasst ist, eine einem Fernsehgerät (54) des adressierten Teilnehmers zugeordneten Adresse oder einen dem Fernsehgerät (54) des adressierten Teilnehmers zugeordneten verschlüsselungs-Schlüssel des adressierten Teilnehmers zu bestimmen, die Nachricht zu einem Kopfstations-Knoten (41 bis 49) eines Fernsehübertragungsnetzes (4, 5, 6) zu übertragen und den Kopfstations-Knoten (41 bis 49) zu veranlassen, die Nachricht zusammen mit der Adresse in ein Fernsehsignal einzufügen, oder die die mittels des Verschlüsselungs-schlüssels verschlüsselte Nachricht in ein Fernsehsignal einzufügen und das Fernsehsignal über einen Fernsehkanal zu senden.

## Revendications

1. Procédé permettant de transférer un message (71) d'un réseau de télécommunication (1) à un abonné adressé, le procédé comprenant les étapes suivantes :
Transmettre le message (71) d'un terminal de télécommunication (22) du réseau de télécommunication (1) à un serveur (3) ; déterminer, par le serveur (3), du type de message du message reçu (71), comparer le type de message du message reçu (71) aux données de profil d'abonné de l'abonné adressé, et vérifier si un terminal de télécommunication (21 à 23) adapté recevoir des messages de ce type est affecté à l'abonné adressé; s'il trouve un tel type de terminal de télécommunication (21 à 23) affecté à l'abonné, transmettre le message reçu (71) au terminal trouvée (21 à 23) ;
s'il ne trouve pas un tel type de terminal de télécommunication (21 à 23) affecté à l'abonné, exécuter les étapes suivantes :
ajouter une adresse allouée à un poste de télévision (51 à 62) de l'abonné adressé ou crypter le message au moyen d'une clé de cryptage allouée à un poste de télévision (51 à 62) de l'abonné adressé et insérer le message dans un signal de télévision (76) ;
diffuser le signal de télévision (76) via un canal de diffusion de télévision ;
filtrer le message sur une unité de réception (74) affectée au poste de télévision (54) de l'abonné adressé ; et
sortir le message sur le poste de télévision (54).

2. Procédé selon la revendication 1,
**caractérisé en ce que**
le procédé comprend en outre les étapes suivantes : réaliser une recherche dans la base de données (31) pour identifier un noeud de tête de réseau (41 à 49) d'un réseau de diffusion de télévision ; et transmettre le message au noeud de tête de réseau identifié pour insérer le message dans le canal de diffusion de télévision.

3. Procédé selon la revendication 2,
**caractérisé en ce que**
le procédé comprend en outre les étapes suivantes : réaliser une recherche dans la base de données (31) pour identifier l'adresse affectée au poste de télévision (54) de l'abonné adressé, et transmettre le message conjointement avec l'adresse (74) au noeud de tête de réseau identifié (43) pour l'insérer dans le canal de diffusion de télévision.

4. Procédé selon la revendication 2 ou 3,
**caractérisé en ce que**
le procédé comprend en outre les étapes suivantes : réaliser une recherche dans la base de données (31) pour identifier une clé de cryptage affectée au poste de télévision (54) de l'abonné adressé et crypter le flot vidéo (76) au moyen de la clé de cryptage.

5. Procédé selon la revendication 1,
**caractérisé en ce que**
le procédé comprend en outre l'étape de réalisation d'une conversion du message au format en vigueur dans un réseau de diffusion de télévision (4, 5, 6).

6. Procédé selon la revendication 5,
**caractérisé en ce que**
le procédé comprend en outre les étapes suivantes : réaliser une recherche dans la base de données (31) pour identifier le type de N réseaux de diffusion (4, 5, 6) utilisés pour diffuser le signal vidéo (76) ; appliquer une conversion des informations adaptée au type identifié de réseau de diffusion de télévision.

7. Procédé selon la revendication 1,
**caractérisé en ce que**
le procédé comprend en outre les étapes suivantes : mémoriser le message extrait sur l'unité de réception (74) ; et indiquer la réception du message à l'abonné adressé.

8. Procédé selon la revendication 1,
**caractérisé en ce que**
le message (71) est un message multimédia ayant un contenu vidéo et le terminal de télécommunication (22 à 23) utilise un numéro de téléphone d'un poste téléphonique RTPC ou RNIS en vue d'adresser le destinataire du message en direction du serveur (3).

9. Serveur (3) permettant de contrôler le transfert des messages (71) d'un réseau de télécommunication (1) aux abonnés adressés, le serveur (3) comprenant une unité de commande adaptée pour recevoir un message d'un terminal de télécommunication (22) du réseau de télécommunication (1), pour déterminer le type de message du message reçu (71), comparer le type de message du message reçu (71) aux données de profil d'abonné de l'abonné adressé, et vérifier si un terminal de télécommunication (21 à 23) adapté pour recevoir les messages de ce type est affecté à l'abonné adressé, l'unité de commande étant en outre adaptée pour transférer, si elle détecte un tel type de terminal de télécommunication (21 à 23) affecté à l'abonné, le message reçu (71) au terminal détecté (21 à 23), et s'il ne détecte pas un tel type de terminal de télécommunication (21 à 23) affecté à l'abonné l'unité de commande étant en outre adaptée pour déterminer une adresse allouée à un poste de télévision (54) de l'abonné adressé ou une clé de cryptage allouée au poste de télévision (54) de l'abonné adressé, transférer le message à un noeud de tête de réseau (41 49) d'un réseau de diffusion de télévision (4, 5, 6) et amener le noeud de tête de réseau (41 à 49) à insérer le message crypté conjointement avec l'adresse ou insérer le message crypté au moyen de la clé de cryptage dans un signal de télévision et diffuser le signal de télévision via un canal de diffusion de télévision.
